# EUROPÄISCHE PATENTSCHRIFT

(11) **EP 1 575 816 B1**
(45) Veröffentlichungstag und Bekanntmachung des Hinweises auf die Patenterteilung: **05.07.2006**
(21) Anmeldenummer: 03813898.8
(22) Anmeldetag: 18.12.2003
(51) Int. Cl.: B61K 9/12, G01M 17/10, G01B 5/20

(54) **MESSEINRICHTUNG ZUM MESSEN DER RUNDHEIT EINES EISENBAHNRADES**
DEVICE FOR MEASURING THE ROUNDNESS OF A RAILROAD WHEEL
DISPOSITIF DE MESURE POUR MESURER LA ROTONDITE D'UNE ROUE DE CHEMINE DE FER

(30) Priorität: 23.12.2002 DE 10260816
(43) Veröffentlichungstag der Anmeldung: 21.09.2005
(73) Patentinhaber: Hegenscheidt-MFD GmbH & Co. KG, 41812 Erkelenz (DE)
(72) Erfinder: HEIMANN, Alfred, 52078 Aachen (DE)
(74) Vertreter: Simons, Johannes
(86) Internationale Anmeldenummer: PCT/EP2003/014480
(87) Internationale Veröffentlichungsnummer: WO 2004/058554

(56) Entgegenhaltungen:
- EP-A- 0 825 413
- DE-U- 8 713 927
- US-A- 2 574 474

## Beschreibung

Die Erfindung betrifft eine Messeinrichtung an wenigstens einer Schiene eines Eisenbahngleises zum Messen der Rundheit eines einzelnen Eisenbahnrades oder der Eisenbahnräder eines Radsatzes während dessen Laufs über die Schiene als Differenz des Umfangsradius der Spurkranzkuppe und des Radius der Lauffläche des Eisenbahnrades in einer Messebene.

Die Rundheit eines Eisenbahnrades ist ein Kriterium für den Komfort des Eisenbahnfahrzeugs. Unrunde Räder regen Eigenschwingungen des Fahrzeugs, des Drehgestells oder des Wagenkastens an, die von den Fahrgästen als unangenehmes Geräusch und Schwingungen empfunden werden. Die Ursachen zum Unrundwerden der Eisenbahnräder sind komplex und resultieren aus dem Lauf der Radlauffläche auf der Schiene. Unrundheiten treten nicht nur einfach je Radumdrehung auf, es sind auch Polygone mit 3-, 6-facher und höherer Zahl pro Umdrehung festgestellt worden. Kritische Rundlaufwerte für ein Eisenbahnrad liegen über dem gesamten Umfang gemessen in der Größenordnung von 0,5 mm als Differenz zweier Radien in der selben Radebene.

Durch Bremsvorgänge mit Blockierung können sich Flachstellen auf der Lauffläche des Eisenbahnrades bilden. Diese sind typischerweise nur kurz, z.B. 50 mm lang, aber im Vergleich zur Unrundheit tief, d.h. Flachstellen weisen Tiefen zwischen 0,5 mm und mehr auf der Lauffläche auf. Demgegenüber verschleißt der Spurkranz auf seinem Außenumfang praktisch nicht; allenfalls bei Straßenbahnrädern gibt es einen geringen Verschleiß. Es ist deshalb erforderlich, die Rundheit von Eisenbahnrädern zu überwachen.

Beispielsweise ist aus der DE 693 05 664 T2 eine Messstation zum Kontrollieren von Eisenbahnfahrzeugrädern bekannt geworden. Die bekannte Messstation hat zwei parallele Schienen; von denen jede einem der Eisenbahnräder zugeordnet ist und aus einer Reihe von Messketten zusammengesetzt ist, denen jeweils Messgeräte zugeordnet sind, welche Messfühler aufweisen. Die bekannte Messstation besteht aus einem mechanischen Untersystem, einem elektronischen Untersystem und einem Druckluftuntersystem. Das mechanische Untersystem wird von einer Platte gebildet, welche Einrichtungen trägt, die potentiometrische Verschiebungssensoren steuern, vier oder mehr pro Gleisstrang, die dem Raddurchmesser, der Spurkranzdicke, der Spurkranzhöhe, dem Spurkranzwinkel und dem Abstand zwischen Radlaufflächen entsprechen. Das elektronische Untersystem setzt sich aus potentiometrischen Sensoren und der Verarbeitungselektronik zusammen, wobei das elektronische Untersystem mit einem Computer in Verbindung steht und eine elektronische Verarbeitungseinheit enthält, die wiederum signalverarbeitende Einheiten enthält. Das Druckluftsystem schafft einen Luftdurchgang zu Druckluftzylindern, welche die Messfühler senkrecht verschieben, wenn ein Fahrzeug darüber fährt. Die Gesamtheit der einzelnen Vorrichtungen der bekannten Messstation ist in einem wasserdichten Schutzgehäuse aus Metall untergebracht, wodurch es möglich wird, die Messstation auch im Freien zu betreiben. Die bekannte Messstation liegt grundsätzlich in der Radlaufrichtung, um drei Messpunkte so lange wie möglich mit dem Eisenbahnrad in Kontakt zu halten. Mit der bekannten Messstation werden die Rundheit und auch die Flachstellen von Eisenbahnrädern mit Hilfe eines Messbalkens, in der zitierten Patentschrift als Messbalken (14) bezeichnet, ermittelt. Der Messbalken tastet die Oberfläche der Spurkranzkuppe relativ zur Schiene ab und misst als Messgröße die Verlagerung der Radlauffläche zur Spurkranzkuppe. Dazu ist es erforderlich, die beiden an der Messung beteiligten Komponenten Schiene und Messbalken sehr steif zu gestalten, um auf diese Weise systematische Fehler, die durch das Gewicht des Fahrzeugs entstehen, das auf das Eisenbahnrad wirkt, möglichst klein zu halten. Dies führt bekanntermaßen zu steifen Konstruktionen und kostenaufwendigen Fundamenten. Darüber hinaus muss verhindert werden, dass sich Fundament und Messbalken durch thermische Einflüsse, z.B. durch Sonneneinstrahlung, welche auf ein im Freien befindliches Eisenbahngleis wirkt, zwischen zwei Kalibrierzyklen merklich zueinander verlagern.

Eine oberbegriffsgemäße Messeinrichtung ist auch aus der DE-U-8 713 927 bekannt geworden.

Aufgabe der vorliegenden Erfindung ist es daher, den Rundlauf und Flachstellen eines Eisenbahnrades in der Weise zu messen, dass sowohl der Einfluss des auf das Eisenbahnrad wirkenden Gewichts als auch die Einflüsse von Temperaturen eine vernachlässigbare Rolle spielen. Darüber hinaus soll die zugehörigen Messeinrichtung einfach in ihrem Aufbau sein und wenig Aufwand bei der Wartung erfordern.

Die Aufgabe wird von einer Messeinrichtung gelost, die die Merkmalskombination von Anspruch 1 aufweist.

Das Eisenbahnrad läuft mit seiner Lauffläche auf einer bahnüblichen Profilschiene ab. Solche Schienen sind z.B. nach den Normen UIC 60 oder S 54 genormt. Durch die Wahl einer geraden Vorlaufstrecke vor Beginn der Messstrecke wird erreicht, dass sich das Eisenbahnrad bzw. der Radsatz mit seinen beiden Eisenbahnrädern nur sehr wenig quer zur Schiene über die Messstrecke verlagert. Die Messstrecke beträgt in der Regel zwischen ein bis zwei Umdrehungen des Eisenbahnrades. Da die Lauffläche des Eisenbahnrades bekanntermaßen ein kegliges Profil hat, würde sich eine derartige Verlagerung als Messfehler auf das Messergebnis auswirken.

Entlang der Messstrecke werden mehrere Messfühler angeordnet. Diese sind mit ihrer Basis an der Schiene befestigt, und der die Spurkranzkuppe des Eisenbahnrades berührende Messfühler misst jeweils in der Messebene der Befestigung des Messfühlers. Der Messfühler misst somit dann fehlerfrei die Spurkranzhöhe, wenn sich das Rad mit seinem Aufstandspunkt genau in der Messebene befindet, welche senkrecht auf der Aufstandsebene der Radlauffläche auf dem Gleis steht und durch die Drehachse des Eisenbahnrades verläuft. Die jeweilige Aufstandsfläche eines Eisenbahnrades auf der Schiene hat annähernd die Größe des Durchmessers einer Erbse. In Ebenen vor und hinter der Messebene wird die Last des Eisenbahnrades die Schiene relativ zur Messebene verbiegen, so dass sich ein Messfehler ergibt, der von der Radlast, Schienensteife und den Auflagerbedingungen der Schiene und Schwelle auf dem Schotter abhängig ist.

Zunächst kann ein einzelner Messfühler die Spurkranzhöhe nur eines Punktes am Radumfang messen. Gemäß der Charakteristik der Unrundheit, oval oder Polygon, werden längs der Schienen innerhalb der vorgegebenen Messstrecke mehrere Messfühler angeordnet. Bei einer Messstrecke entsprechend dem Radumfang und bei einer erwarteten "Dreiecksbildung" für die Radform wird man deshalb mindestens sechs Messfühler vorsehen.

Wichtig für die Anordnung der Messfühler innerhalb der Messstrecke ist es, dass mindestens immer ein Messfühler am Spurkranz messend anliegen muss. Dies ist zum Messen von Flachstellen erforderlich. Entsprechend dem größten Messweg und dem kleinsten Durchmesser des zu vermessenden Eisenbahnrades kann der gegenseitige Abstand zweier Messfühler rechnerisch bestimmt werden. Nimmt man ein Rad von 600 mm Laufkreisdurchmesser und einen Messbereich von 30 mm des Messfühlers, so ergibt sich ein gegenseitiger Abstand der einzelnen Messfühler von etwa 300 mm.

Jeder Messfühler besteht aus einem Messhebel, der als Taster zum Berühren des Eisenbahnrades auf dem Umfang der Spurkranzkuppe jeweils eine mit großer Genauigkeit wälzgelagerte Rolle trägt. Diese Rolle soll Verschleiß durch Relativbewegungen und Verfälschungen der Messwerte durch Reibkräfte verringern. Die Rolle sitzt an einem Ende eines genau geführten Messhebels, dessen Drehachse ein Winkelmesssystem von hoher Auflösung trägt. Die Rolle des Messhebels wird durch eine Rückholfeder an die Spurkranzkuppe gedrückt. Als bewegtes Teil werden die Masse des Messhebels und der Rolle so klein wie möglich, die Steifigkeit so groß wie möglich ausgeführt. Da sich die Messkraft während einer Messung möglichst wenig ändern soll, muss die zur Krafterzeugung verwendete Rückholfeder eine weiche Kennlinie haben.

Der Messfühler ist in der Messebene, nämlich dort wo die Tastrolle sitzt, und nur an dieser Stelle mit der Schiene steif verbunden. In der Messebene ist auch ein Kalibrieranschlag vorgesehen, der es erlaubt, für alle Messfühler einen gleichen Nullpunkt, unabhängig von der thermischen Verformung der jeweiligen Messhebel zu haben.

Das Eisenbahnrad wird bei der ersten Berührung des Messfühlers die Rolle stoßartig beschleunigen. Es ist deshalb ein Leerweg vorgesehen, um den Messfühler durch seine natürliche oder zusätzliche Dämpfung und Reibung zu beruhigen.

Die Rückholfeder muss genügend Messkraft aufbringen, um kleinere Verunreinigungen der Spurkranzkuppe zu überwinden. Gegebenenfalls kann der Messstrecke eine Anlage zur Reinigung des Spurkranzes vorgeschaltet sein. Hinter dem Scheitelpunkt des Eisenbahnrades muss die Kraft der Rückholfeder die Beschleunigung des Messhebels gewährleisten. Die Kraft der Beschleunigung lässt sich aus der Trägheit des Messhebels und der Tastrolle sowie dem Raddurchmesser und der Geschwindigkeit des Eisenbahnrades bestimmen.

Die Messstrecke aller zwölf Messfühler, beispielsweise innerhalb der Messstrecke eines Gleises, werden mit hoher Frequenz erfasst. Die Frequenz richtet sich nach der Auflösung, die für die Unrundheit benötigt wird und bestimmt sich wiederum über Durchmesser und Geschwindigkeit des Eisenbahnrades. Darüber hinaus muss die Frequenz so hoch sein, dass die kürzeste Flachstelle mit drei Punkten erfasst werden kann.

Sobald das Eisenbahnrad mit zwei oder drei Messfühlern gleichzeitig berührt wird und ein Messfühler die Spurkranzhöhe bestimmen konnte, dies ist im Ablauf zwangsläufig der Fall, können die Durchmesser der Lauffläche und der Spurkranzkuppe des Eisenbahnrades bestimmt werden. Das Messergebnis wird durch den Einfluss der Last des Eisenbahnrades verfälscht, daher korrigiert man z.B. mit einer mittleren Last. Die Genauigkeit der Berechnung des Durchmessers des Eisenbahnrades kann noch dadurch gesteigert werden, dass man alle Datenpaare aller Messfühler (mit Ausnahme von Messbereichen, die durch Flachstellen verfälscht sind) in der Berechnung berücksichtigt. Man kann darüber hinaus die nach der Messung ermittelte Unrundheit des Eisenbahnrades wieder korrigierend in den Rechengang einführen und so die Genauigkeit der Berechnung des Durchmessers erhöhen. Weiterhin kann man sowohl aus den Signalen eines einzelnen Messfühlers bei berechnetem Enddurchmesser der Lauffläche des Eisenbahnrades oder aus dem zeitlichen Abstand, der entsteht, bis zwei angrenzende Messfühler die Spurkranzhöhe messen konnten, die Geschwindigkeit des Eisenbahnrades errechnen.

Mit Hilfe der Kreisgleichung und der Geschwindigkeit des Eisenbahnrades können nun die Messwerte der Messfühler in der Weise umgerechnet werden, dass sie einen kontinuierlichen Rundlauf ergeben. Durch systematische Fehler, beispielsweise die Radsatzlast, und zufällige Fehler ist das Ergebnis verfälscht. Es ist jedoch ausreichend, um aus den so behandelten Daten das Signal der Flachstelle sicher zu erkennen und deren Größe zu bestimmen. Eine etwas weniger genaue Darstellung ergibt sich naturgemäß aus dem Quellsignal.

Das Messsignal ist dann, wenn sich der Aufstandspunkt des Eisenbahnrades in der Nähe der Messebene befindet, weniger verfälscht. In diesem Bereich ist somit der errechnete "kontinuierliche Rundlauf" genauer und kann zumindest zur Bestimmung einer Tangente an die Rundlaufkurve des Eisenbahnrades in der Messebene genutzt werden. Die Kenntnis des Laufkreisdurchmessers des Eisenbahnrades erlaubt es, die Messwerte, die über eine Umdrehung hinaus gehen, für eine Polardiagrammdarstellung, "Spurkranzhöhendifferenz über Drehwinkel des Eisbahnrades", zu nutzen. Der Messfehler, der durch eine axiale Radbewegung quer zur Schiene über die Kegelform der Lauffläche des Eisenbahnrades entsteht, kann verringert werden, in dem man die Messwerte des Winkels 0° und die kurz vor und kurz nach 360° liegenden Messwerte einander durch lineare Interpolation angleicht und somit eine Korrektur für die Messwerte der dazwischen liegenden Messfühler hat.

Neben der konstruktiven Ausführung des Messfühlers als Schwinge mit Achse quer zur Schiene sind sinngemäß auch andere konstruktive Ausführungen wie lineare Führungen und schienen-parallele Drehpunkte möglich.

Es sind die für spezifische Messwege von 40 mm bei Auflösung unter 5 µ möglichen analogen oder digitalen Messmittel verwendbar, wie z.B. Encoder, incrementale, lineare Maßstäbe oder magnetostriktive Verfahren, für welche es zahlreiche Hersteller gibt.

Nachfolgend wird die Erfindung an einem Ausführungsbeispiel näher beschrieben.

Es zeigen in stark vereinfachter teilweise schematischer Darstellung die
- Fig. 1 die Lage eines Eisenbahnrades auf einer Schiene,
- Fig. 2 das Abtasten der Spurkranzkuppe eines über die Schiene laufenden Eisenbahnrades,
- Fig. 3 einen Messfühler in der Seitenansicht,
- Fig. 4 den Messfühler der Fig. 3 in der Vorderansicht,
- Fig. 5 ein Wegzeitdiagramm eines Messfühlers,
- Fig. 6 ein Wegzeitdiagramm mehrerer Messfühler innerhalb einer Messstrecke,
- Fig. 7 eine Flachstelle in einem Rohsignal und
- Fig. 8 eine Flachstelle im Rundlauf.

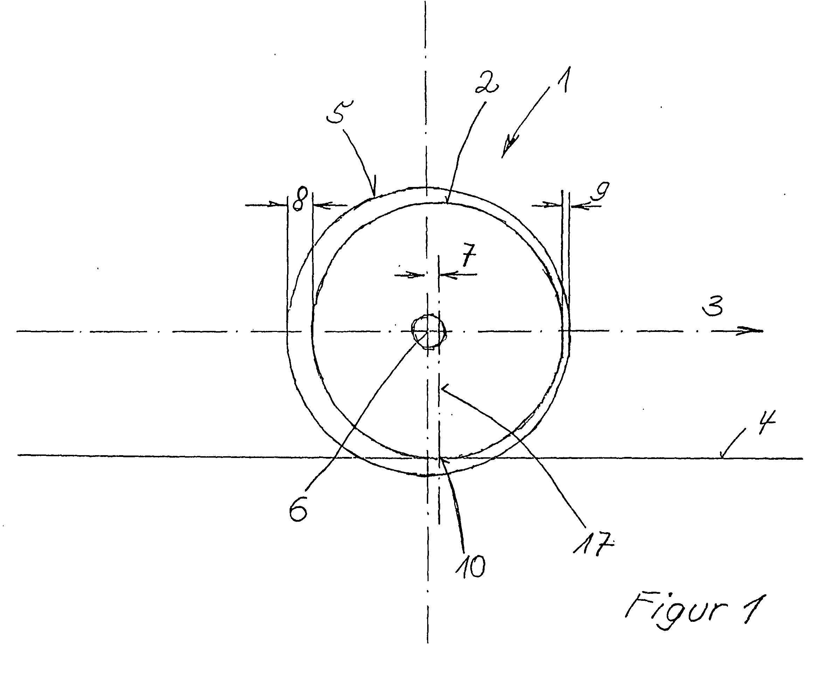

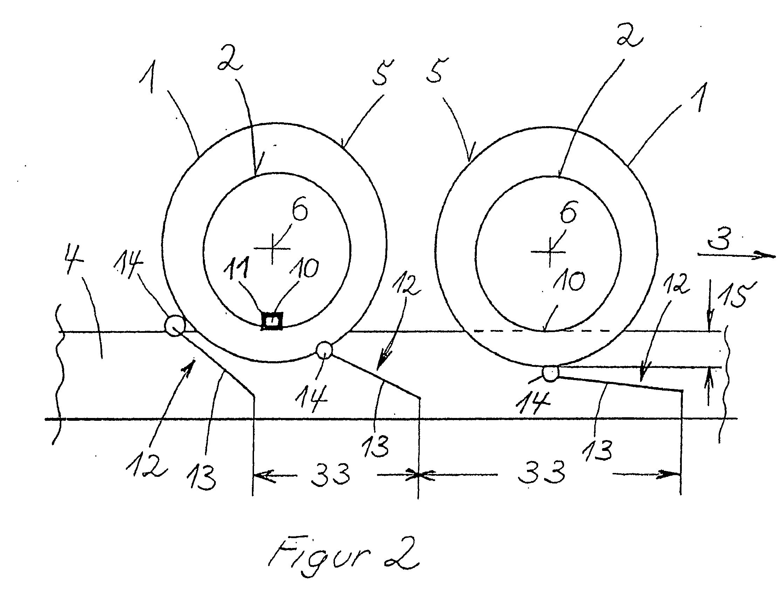

Die Fig. 1 zeigt ein Eisenbahnrad 1 in einem Augenblick, wo es mit seiner Lauffläche 2 in der Richtung 3 auf einer Schiene 4 abrollt. In einem Gleis, welches bekanntlich aus zwei zueinander parallelen und beabstandeten Schienen 4 besteht, wird das Eisenbahnrad 1 vom Spurkranz 5 gehalten. Beim Lauf durch das Gleis dreht sich das Eisenbahnrad 1 um seine Drehachse 6, welche zur Bildebene der Fig. 1 senkrecht ist. In der Fig. 1 ist beispielsweise die Unrundheit 7 eines Eisenbahnrades 1 dargestellt. Die Unrundheit 7 entspricht der Differenz der Spurkranzhöhen 8 und 9 beispielsweise gemessen in der Ebene der Drehachse 6 in der Laufrichtung 3. Im vorliegenden Beispiel der Fig. 1 befindet sich die Aufstandsfläche 10 des Eisenbahnrades 1 um den Betrag der Unrundheit 7 gegenüber der Radachse 6 versetzt. Beispielsweise ist die Aufstandsfläche 10 als weißer Punkt innerhalb eines schwarzen Rahmens 11 in der Fig. 2 dargestellt. Der schwarze Rahmen 11 veranschaulicht die Größe einer Flachstelle im Verhältnis zur normalen Aufstandsfläche 10 eines Eisenbahnrades 1 auf einer Schiene 4.

Das in der Laufrichtung 3 auf der Schiene 4 abrollende Eisenbahnrad 1 der Fig. 2 wird an der Spurkranzkuppe 5 von mehreren Messfühlern 12 berührt. Jeder Messfühler 12 besteht aus einem Messhebel 13, an dessen äußeren Ende jeweils eine Messrolle 14 befestigt ist. Wie man in der Fig. 2 erkennen kann, nehmen die Messfühler 2 mit ihren Tastrollen 14 beim Berühren der Spurkranzkuppe 5 des Eisenbahnrades 1 entsprechend dem in der Laufrichtung 3 zurück gelegten Weg jeweils unterschiedliche horizontale Stellungen 15 ein. Die horizontalen Stellungen 15 der Tastrollen 14 entsprechen dem Messweg.

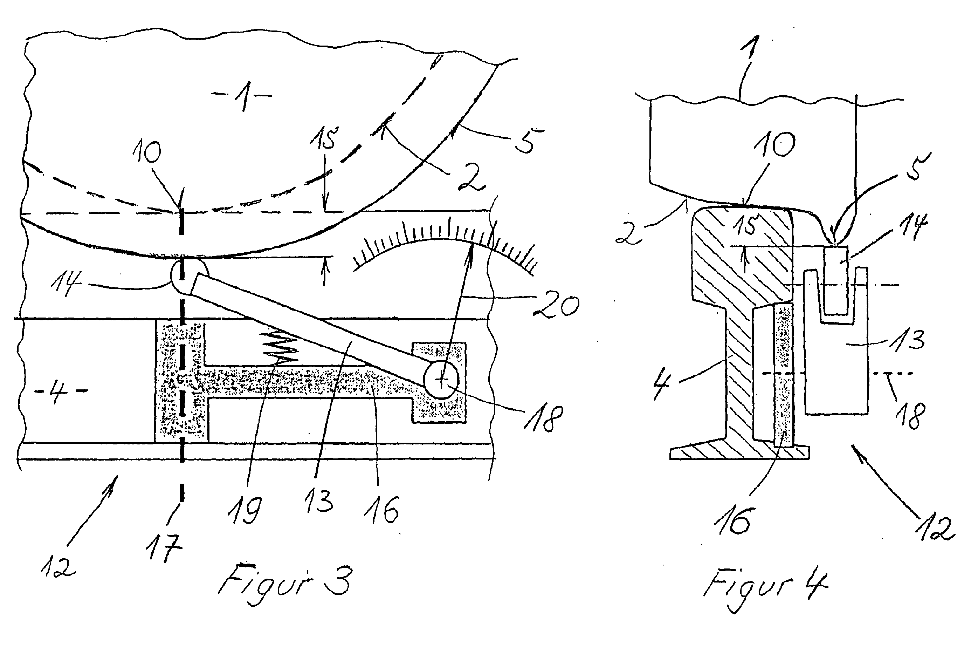

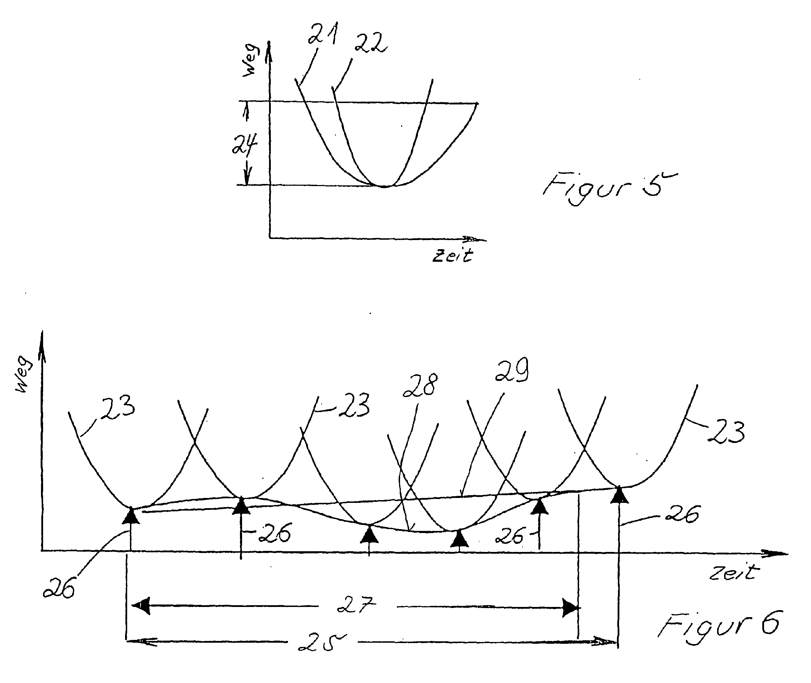

Jeder Messfühler 12 (Fig. 3, Fig. 4) besteht aus einer Basis 16, die in der Messebene 17 mit der Schiene 4 befestigt ist. Die Messebene 17 entspricht der Ebene, welche auf dem Gleis 4 senkrecht zur Aufstandsfläche 10 und parallel zur Radachse 6 verläuft. Mit der Basis 16 ist der Messhebel 13 über ein Drehgelenk 18 drehbar verbunden. Zugleich stützt sich der Messhebel 13 auf der Basis 16 über eine Rückholfeder 19 ab. In dem Drehgelenk 18 ist außerdem ein Winkelmessgeber 20 vorgesehen, der die jeweilige horizontale Stellung 15 der Messrolle 14 an der Spurkranzkuppe 5 in der Messebene 17 ermittelt.

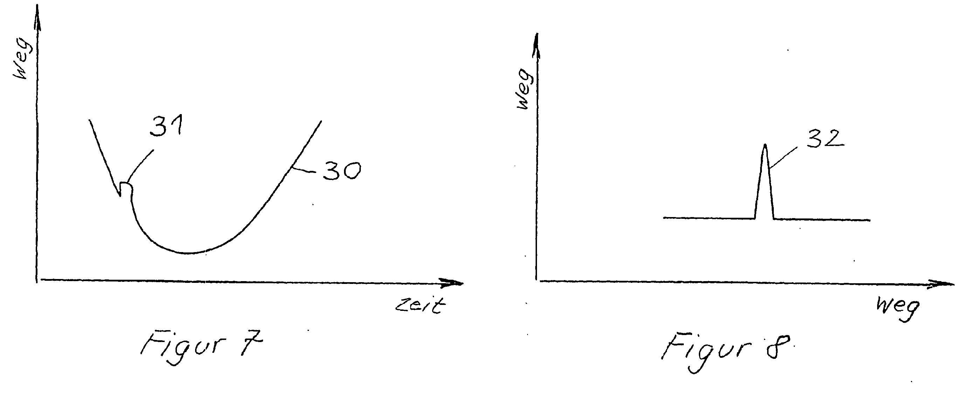

Die Fig. 5 zeigt das Signal eines Messfühlers 12 über der Zeit bei unterschiedlichen Geschwindigkeiten des Eisenbahnrades 1 in der Bewegungsrichtung 3. Beispielsweise entspricht das Signal 21 einem langsamen Lauf des Eisenbahnrades 1 und die Kurve 22 einem schnellen Lauf des Eisenbahnrades 1. Der Abschnitt 24 in dem Wegzeitdiagramm der Fig. 5 entspricht dem Messweg, welcher von den einzelnen Messfühlern 12 beim Überrollen der Spurkranzkuppe 5 zurück gelegt wird.

In einem der Fig. 5 ähnlichen Wegzeitdiagramm der Fig. 6 sind eine Mehrzahl von Messkurven 23 über einer Messstrecke 25 nebeneinander angeordnet, wie sie den Signalen 26 der einzelnen Messfühler 12 entsprechen. Wie in der Fig. 6 erkennbar, ist die Messstrecke 25 etwas größer als der Radumfang 27, den ein Eisenbahnrad 1 bei einer einzigen Umdrehung zurücklegt. Wie in der Fig. 6 weiter erkennbar, sind die Signale 26 jeweils unterschiedlich lang. Tangenten, an die Messkurven 23 angelegt, ergeben einen annähernd sinusförmigen Verlauf 28. Dieser Verlauf 28 entspricht der gemessenen Unrundheit des Eisenbahnrades 1 über einem Umfang der Radlauffläche 2. Im vorliegenden Fall hat die Hüllkurve 28 außerdem noch einen Anstieg 29. Der Anstieg 29 stellt die Querbewegung des Eisenbahnrades 1 beim Abrollen auf dem Gleis in Richtung der Drehachse 6 dar.

Das Messsignal 30 der Fig. 7 zeigt eine Einbuchtung 31. Die Einbuchtung 31 rührt von einer Flachstelle 11 her, welche auf der Lauffläche 2 des Eisenbahnrades 1 ermittelt wurde. Eine isolierte Darstellung 32 der Flachstelle 11 hinsichtlich ihrer Lage und Tiefe auf dem Umfang der Lauffläche 2 ist sodann in der Fig. 8 zu sehen.

### Bezugszeichenliste

- 1: Eisenbahnrad
- 2: Lauffläche
- 3: Laufrichtung
- 4: Schiene
- 5: Spurkranz
- 6: Drehachse
- 7: Unrundheit
- 8: Spurkranzhöhe
- 9: Spurkranzhöhe
- 10: Aufstandsfläche
- 11: Flachstelle
- 12: Messfühler
- 13: Messhebel
- 14: Tastrolle
- 15: Messweg
- 16: Basis
- 17: Messebene
- 18: Drehgelenk
- 19: Rückholfeder
- 20: Winkelmessgeber
- 21: langsamer Lauf
- 22: schneller Lauf
- 23: Messkurven
- 24: Messweg
- 25: Messstrecke
- 26: Einzelsignal
- 27: Radumfang
- 28: Unrundheit
- 29: Querbewegung
- 30: Messsignal
- 31: Flachstelle
- 32: Darstellung Flachstelle
- 33: Abstand der Messfühler

## Patentansprüche

1. Messeinrichtung an wenigstens einer Schiene eines Eisenbahngleises zum Messen der Rundheit eines einzelnen Eisenbahnrades oder der Eisenbahnräder eines Radsatzes während dessen Laufs über die Schiene als Differenz des Umfangsradius der Spurkranzkuppe und des Radius der Lauffläche des Eisenbahnrades in einer Messebene,
wobei die Messeinrichtung innerhalb einer Messstrecke (25) entlang der Schiene (4)
- aus einer Mehrzahl von einzelnen Messfühlern (12) besteht, die jeweils
- einen seitlichen Abstand (33) voneinander haben und
- in der Messebene (17) längs der Drehachse (6) des Eisenbahnrades bzw. des Radsatzes und senkrecht zur Aufstandsfläche (10) des jeweiligen Eisenbahnrades (1) mit der Schiene (4) verbunden sind,
**dadurch gekennzeichnet, dass** die Messfühler (12) als Tastrolle (14) ausgebildet sind,

2. Messeinrichtung nach Anspruch 1, **dadurch gekennzeichnet, dass** die Messstrecke (25) zwischen einem und zwei Umfängen der Lauffläche (2) des Eisenbahnrades (1) beträgt.

3. Messeinrichtung nach den Ansprüchen 1 und 2, **dadurch gekennzeichnet, dass** innerhalb der Messstrecke (25) wenigstens ein Messfühler (12) die Spurkranzkuppe (5) am Umfang berührt.

4. Messeinrichtung nach Anspruch 3, **dadurch gekennzeichnet, dass** während einer vorgegebenen Messzeit wenigstens zwei angrenzende Messfühler (12) die Spurkranzkuppe (4) am Umfang gleichzeitig berühren.

5. Messeinrichtung nach einem der Ansprüche 1 bis 4, **dadurch gekennzeichnet, dass** jeder Messfühler (12) aus folgenden Elementen besteht:
- einer an der Schiene (4) befestigbaren Basis (16),
- einem Messhebel (13) mit
- einer Tastrolle (14) am äußeren Ende,
- einem Drehgelenkt (18) an der Basis (16) für den Messhebel (12),
- einer Rückholfeder (19) zwischen der Tastrolle (12) und dem Drehgelenk (18) und
- einem Winkelmessgeber (20) im oder am Drehgelenk (18).

6. Messeinrichtung nach Anspruch 5, **dadurch gekennzeichnet, dass** ein Kalibrieranschlag vorgesehen ist.

7. Messeinrichtung nach einem der Ansprüche 1 bis 6, **dadurch gekennzeichnet, dass** eine Auswertungseinrichtung vorgesehen ist, mit der jeder einzelne Messfühler (12) verbindbar ist.

8. Messeinrichtung nach Anspruch 7, **dadurch gekennzeichnet, dass** die Auswertungseinrichtung Untereinrichtungen aufweist zum Ermitteln
- der Rundheit (7) des Eisenbahnrades (1) mit genauen Werten in den Messpunkten (23) der Fühler (12) und mit Tangenten in den Messpunkten,
- des Raddurchmessers im Laufkreis der Lauffläche (2),
- der Höhe des Spurkranzes (5) in der Aufstandsfläche (10) der Lauffläche (2) und
- der Anzahl, der Lage und jeweiligen Tiefe von Flachstellen (11) in der Lauffläche (2) .

9. Messeinrichtung nach Anspruch 8, **dadurch gekennzeichnet, dass** die Auswertungseinrichtung eine Untereinrichtung aufweist zur Ermittlung des Querversatzes (29) des Eisenbahnrades (1) bzw. der Eisenbahnräder (1) eines Radsatzes beim Durchlaufen (3) des Messstrecke (25).

10. Messeinrichtung nach Anspruch 8, **dadurch gekennzeichnet, dass** die Auswertungseinrichtung eine Untereinrichtung aufweist welche rekursiv den Durchmesser des Eisenbahnrades (1) bzw. der Eisenbahnräder (1) eines Radsatzes mit einer gemessenen Abweichung (7) von der Rundheit des jeweiligen Eisenbahnrades (1) korrigiert.

11. Messeinrichtung nach Anspruch 5, **dadurch gekennzeichnet, dass** an der Tastrolle (14) ein Schmutzabstreifer vorgesehen ist.

## Claims

1. Measuring device on at least one rail of a railway track for measuring the roundness of an individual railway vehicle wheel or the railway vehicle wheels of a set of wheels during running thereof on the rail as a difference of the circumferential radius of the wheel flange cap and the radius of the running surface of the railway vehicle wheel in a measuring plane, wherein the measuring device, within a measuring path (25) along the rail (4), consists of
- a plurality of individual measuring sensors (12), which respectively
- have a lateral distance (33) from one another and
- are connected to the rail (4) in the measuring plane (17) along the axis of rotation (6) of the railway vehicle wheel or the set of wheels and perpendicularly to the contact surface (10) of the respective railway vehicle wheel (1), **characterised in that** the measuring sensors (12) are configured as feeler roller (14).

2. Measuring device according to claim 1, **characterised in that** the measuring path (25) is between one and two times the circumference of the running surface (2) of the railway vehicle wheel (1).

3. Measuring device according to claims 1 and 2, **characterised in that**, within the measuring path (25), at least one measuring sensor (12) contacts the circumference of the wheel flange cap (5).

4. Measuring device according to claim 3, **characterised in that** during a predetermined measuring time at least two adjacent measuring sensors (12) contact the circumference of the wheel flange cap (4) at the same time.

5. Measuring device according to any one of claims 1 to 4, **characterised in that** each measuring sensor (12) consists of the following elements:
- a base (16) that may be fastened to the rail (4),
- a measuring lever (13) comprising
- a touch roller (14) at the outer end,
- a swivel joint (18) on the base (16) for the measuring lever (12),
- a return spring (19) between the touch roller (14) and the swivel joint (18)
- and an angle sensor (20) in or on the swivel joint (18).

6. Measuring device according to claim 5, **characterised in that** a calibration stop is provided.

7. Measuring device according to any one of claims 1 to 6, **characterised in that** an evaluation device, to which each individual measuring sensor (12) may be connected, is provided.

8. Measuring device according to claim 7, **characterised in that** the evaluation device comprises subordinate means for determining
- the roundness (7) of the railway vehicle wheel (1) with precise values in the measuring points (23) of the sensors (12) and with tangents in the measuring points,
- the wheel diameter in the running tread of the running surface (2),
- the height of the wheel flange (5) in the contact surface (10) of the running surface (2) and
- the number, the position and respective depth of wheel flats (11) in the running surface (2).

9. Measuring device according to claim 8, **characterised in that** the evaluation device comprises a subordinate means for determining the transverse displacement (29) of the railway vehicle wheel (1) or the railway vehicle wheels (1) of a set of wheels on passing through (3) the measuring path (25) .

10. Measuring device according to claim 8, **characterised in that** the evaluation device comprises a subordinate means that recursively corrects the diameter of the railway vehicle wheel (1) or the railway vehicle wheels (1) of a set of wheels with a measured deviation (7) from the roundness of the respective railway vehicle wheel (1).

11. Measuring device according to claim 5, **characterised in that** a dirt scraper is provided on the touch roller (14).

## Revendications

1. Dispositif de mesure sur au moins un rail d'une voie ferrée pour mesurer la rotondité d'une seule roue de chemin de fer ou des roues d'un jeu de roues pendant leur déplacement sur le rail, en tant que différence entre le rayon de la circonférence du sommet du boudin et le rayon de la surface de roulement de la roue, dans un plan de mesure, le dispositif de mesure, au sein d'une section mesurée (25) le long du rail (4), consistant en plusieurs capteurs individuels (12) qui sont à distance latérale (33) les uns des autres et sont reliés au rail (4), dans le plan de mesure (17), le long de l'axe de rotation (6) de la roue de chemin de fer, respectivement du jeu de roues, et perpendiculairement à la surface d'appui (10) de la roue de chemin de fer respective (1),
**caractérisé en ce que**
les capteurs (12) sont conçus en tant que rouleau palpeur (14).

2. Dispositif de mesure selon la revendication 1, **caractérisé en ce que** la section mesurée (25) est d'un ordre de grandeur situé entre une et deux circonférences de la surface de roulement (2) de la roue (1) de chemin de fer.

3. Dispositif de mesure selon les revendications 1 et 2, **caractérisé en ce que**, dans la section mesurée (25), au moins un capteur (12) entre en contact avec le sommet du boudin (5), sur la circonférence.

4. Dispositif de mesure selon la revendication 3, **caractérisé en ce que**, pendant un temps de mesure prédéterminé, au moins deux capteurs (12) voisins entrent simultanément en contact avec le sommet du boudin (5), sur la circonférence.

5. Dispositif de mesure selon l'une des revendications 1 à 4, **caractérisé en ce que** chaque capteur (12) est composé des éléments suivants:
- une base (16) qui peut être fixée sur le rail (4),
- un levier de mesure (13) avec
- un rouleau palpeur (14) à l'extrémité extérieure,
- une articulation tournante (18) sur la base (16) pour le levier de mesure (12),
- un ressort de rappel (19) entre le rouleau palpeur (12) et l'articulation tournante (18) et
- un capteur d'angle (20) dans ou sur l'articulation tournante (18) .

6. Dispositif de mesure selon la revendication 5, **caractérisé en ce qu'**une butée de calibrage est prévue.

7. Dispositif de mesure selon l'une des revendications 1 à 6, **caractérisé en ce qu'**une unité d'évaluation est prévue, avec laquelle chacun des capteurs (12) peut être relié.

8. Dispositif de mesure selon la revendication 7, **caractérisé en ce que** l'unité d'évaluation présente des dispositifs subordonnés pour la détermination
- de la rotondité (7) de la roue de chemin de fer (1) avec des valeurs précises aux points de mesure (23) des capteurs (12) et avec des tangentes aux points de mesure
- du diamètre de la roue au cercle de roulement de la surface de roulement (2),
- de la hauteur du boudin (5) dans la surface de support (10) de la surface de roulement (2), et
- du nombre, de la position et de la profondeur respective de méplats (11) dans la surface de roulement (2).

9. Dispositif de mesure selon la revendication 8, **caractérisé en ce que** le dispositif d'évaluation présente un dispositif subordonné pour la détermination du décalage latéral (29) de la roue de chemin de fer (1) respectivement des roues de chemins de fer (1) d'un jeu de roues lors du parcours (3) de la section mesurée (25).

10. Dispositif de mesure selon la revendication 8, **caractérisé en ce que** le dispositif d'évaluation présente un dispositif subordonné qui corrige de manière récursive le diamètre de la roue de chemin de fer (1), respectivement des roues de chemin de fer (1) d'un jeu de roues, avec la divergence de rotondité mesurée (7) de la roue de chemin de fer (1) concernée.

11. Dispositif de mesure selon la revendication 5, **caractérisé en ce qu'**un décrottoir est prévu sur le rouleau palpeur (14).
